# EUROPEAN PATENT SPECIFICATION

(11) **EP 0 840 504 B1**
(45) Date of publication and mention of the grant of the patent: **19.10.2005**
(21) Application number: 97922113.2
(22) Date of filing: 20.05.1997
(51) Int. Cl.: H04N 5/445

(54) **CUSTOMIZED MENU SYSTEM FOR HIERARCHICAL MENU AND TELEVISION SYSTEM WITH THE SAME**
KUNDENSPEZIFISCHES MENÜSYSTEM FÜR HIERARCHISCHES MENÜ UND FERNSEHSYSTEM DAMIT
SYSTEME DE MENU PERSONNALISE POUR MENU HIERARCHIQUE ET SYSTEME TELEVISUEL LE COMPORTANT

(30) Priority: 20.05.1996 JP 12454296
(43) Date of publication of application: 06.05.1998
(73) Proprietor: SONY CORPORATION, Tokyo 141 (JP)
(72) Inventor: FUKUMOTO, Masaharu, Shinagawa-ku, Tokyo 141 (JP); SEGAWA, Hiroyuki, Shinagawa-ku, Tokyo 141 (JP); ODA, Osamu, Shinagawa-ku, Tokyo 141 (JP); YORITATE, Miwako, Shinagawa-ku, Tokyo 141 (JP)
(74) Representative: Nicholls, Michael John
(86) International application number: PCT/JP1997/001697
(87) International publication number: WO 1997/044952

(56) References cited:
- EP-A- 0 648 054
- EP-A- 0 737 006
- WO-A-94/13107
- JP-A- 4 157 991
- JP-A- 5 236 372
- JP-A- 5 300 445
- JP-A- 6 350 869
- JP-A- 7 312 729
- JP-A- 8 186 774
- JP-A- 8 317 305
- JP-A- 60 212 064

## Description

The present invention relates to improvements in hierarchical menus which display adjustable items on a screen for making adjustments in an audio-visual equipment comprising a display such as a television receiver, a video tape recorder or the like, and more particularly to a scheme of adjusting hierarchical menus to list adjustable items in accordance with the frequency in use by a user in order to position them as a menu, and to a television system which employs this scheme.

In recent years, improvements in performance and increase in functions have been significant in the field of an AV equipment, for example, television, video, and so on, and the number of items to be adjusted through menus has been increased, thereby making a menu operation extremely complicated. For this reason, it is desirable for all users to select more frequently adjusted items from a menu with the least possible steps of operation, although such items frequently adjusted by respective users cannot be uniquely determined.

In such a situation, a conventional hierarchical menu scheme forms more submenus (menus at and subsequent to the second level) which subdivide respective items, as the number of selectable items is increased in a menu, and results in menus with a larger number of hierarchical levels.

Incidentally, although adjustable items frequently adjusted by respective users in, for example, a television receiver, a video tape recorder and so on cannot be uniquely determined, it is required to allow all users to select more frequently adjusted items from a menu with the lest possible steps of operation.

However, assuming that a user repeatedly selects an adjustable item which he desires to select, if the adjustable item is located at a lower hierarchical level of menus composed of a large number of hierarchical levels, the user must perform a menu operation involving (1) selection and (2) determination a number of items equal to the number of hierarchical levels on all such occasions, thereby presenting a problem that the menu is extremely inconvenient.

In addition, when a plurality of items are frequently selected in sequence from hierarchical menus, conventional schemes always require repetitions of extremely complicated operation steps which involve selection of an item at a certain hierarchical level, movement to a menu of another hierarchical level, and selection of an adjustable item.

EP-A2-0737006 which is part of the state of the art by virtue of Art. 54(3) EPC discloses a method of displaying a hierarchical menu structure and a television system in accordance with the precharacterising portion of the independent claims.

Therefore, the present invention has been proposed in view of the problems of the prior art as mentioned above, and it is an object to provide a customized menu scheme in menu hierarchy which is capable of allowing each user to select a selected adjustable item with an extremely small number of menu operations.

A first aspect of the present invention provides a method of displaying on a screen of an audio-visual apparatus a plurality of adjustable items in a menu hierarchy comprising a main menu and a plurality of sequentially displayable submenus, each for classifying adjustable items in accordance with the type of the items, so that adjustment values for said displayed adjustable items can be appropriately set and changed, said menu hierarchy being displayable in response to operation of a remote control key characterised in that:
said menu hierarchy is displayable in response to operation of a key on the body of said audio-visual apparatus;
a customized menu comprising a selection of said adjustable items arbitrarily selected and registered by a user can be added to and deleted from said menu hierarchy; and in that
said customized menu may selectably be set to be displayed in response to said operation of said key or remote control key before said main menu.

A second aspect of the present invention provides a television system comprising:
a system microcomputer for controlling system adjustments through a menu hierarchy comprising a main menu and a plurality of displayable submenus each for classifying adjustable items in accordance with the type of the items, so that adjustment values for said displayed adjustable items can be appropriately set and changed, said menu hierarchy being displayable in response to operation of a remote control; and
a display for displaying said adjustable items of said submenus on a screen, characterised in that:
   said menu hierarchy is displayable in response to operation of a key on the body of said audio-visual apparatus;
   a customized menu comprising a selection of said adjustable items arbitrarily selected and registered by a user can be added to and deleted from said menu hierarchy; and in that
   said customized menu may selectably be set to be displayed in response to said operation of said key or remote control key before said main menu.

With the configuration as mentioned above, the customized menu comprising adjustable items frequently selected by the user is added to or deleted from the hierarchical menus, thereby allowing each user to select a required adjustable item with an extremely small number of menu operations.

The invention will be further described by way of example with reference to the accompanying drawings, in which:-
Fig. 1 is a general block diagram schematically illustrating a television system which employs a customized menu scheme according to the present invention;
Fig. 2 is a general block diagram illustrating menu hierarchy according to the present invention;
Fig. 3 and Fig. 4 are diagrams each illustrating items displayed on a screen in a hierarchical menu according to the present invention;
Fig. 5 is a general block diagram of menu hierarchy according to the present invention including a customized menu;
Fig. 6 and Fig. 7 are diagrams each illustrating a customized menu, according to the present invention, displayed on a screen;
Fig. 8 is a flow chart of processing for determining an input of a customized menu according to the present invention; and
Fig. 9 is a flow chart of processing for keys associated with a customized menu in hierarchical menus according to the present invention.

A customized menu scheme in menu hierarchy and a television system comprising this scheme, according to the present invention will be described with reference to the drawings in the order of a television system, menu hierarchy and a customized menu scheme in the menu hierarchy.

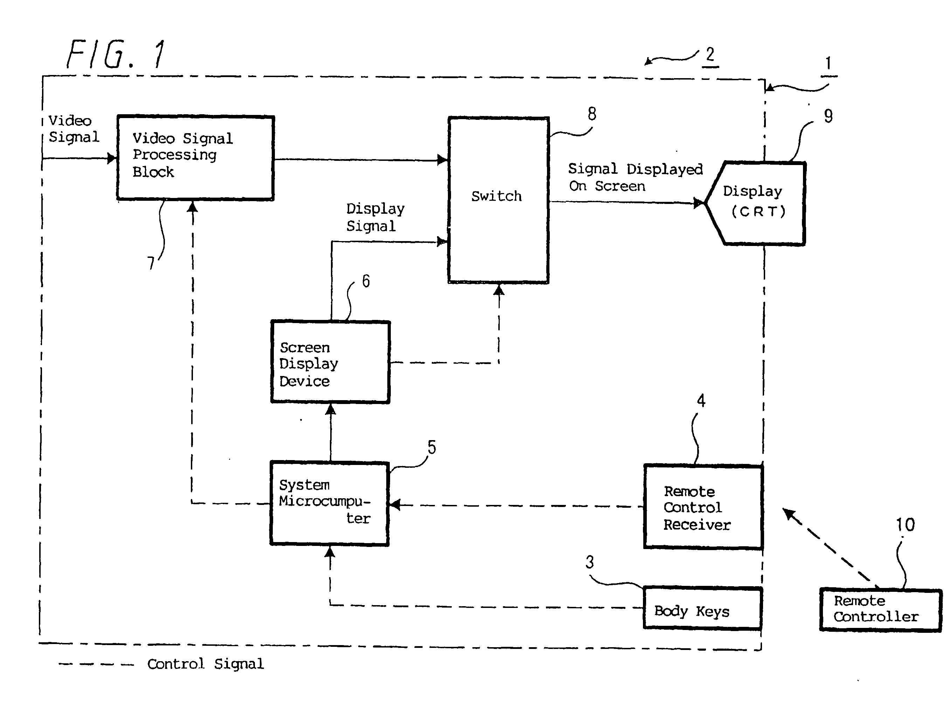

A television system 1 is composed of a television receiver body 2 and a remote controller 10 for operating a menu, setting a channel and so on, as illustrated in Fig. 1.

The television receiver body 2 is composed of a body key 3 for operating a menu and for operating a channel, a volume of sound and so on; a remote control light receiver 4; a system microcomputer 5 driven by operations of the body key 3 and the remote controller 10; a screen display device 6 for generating a display signal including data for displaying menu items on a screen; a video signal processing block 7 for receiving a video signal; a switch 8 for superimposing a display signal on a video signal, or for selecting a single display of either of the video signal and the display signal; and a display 9 including a CRT or the like for displaying a signal selected by the switch 8.

Although not shown in the figure, the body key 3 and the remote controller 10 comprise adjustment keys for operating a menu, setting a channel, adjusting a volume, and so on, wherein menu operations are performed with four adjustment keys including a menu key, an up key, a down key and a determination key.

The menu key may be used to display or delete a menu on the screen of the display 90. The up key and the down key may be used to move a cursor within a menu in upward and downward directions and to change an adjustment value for each adjustable item displayed on the screen. The determination key is used for a transition from a certain menu to another menu and for determination of an adjustment value.

A system microcomputer 5 contains control programs and data associated with hierarchical menus and a customized menu, and controls principal functions including adjustments of the television receiver body 2.

In the television system 1 thus composed, the system microcomputer 5 can be driven by the user operating the body key 3 or the remote controller 10.

When the user operates the remote controller 10, a signal from the remote controller 10 is detected by the remote control light receiver 4 and sent to the system microcomputer 5. When the body key 3 is operated, operated data is directly inputted to the system microprocessor 5.

The system microprocessor 5, when receiving a signal from the body key 3 or the remote control light receiver 4, decodes the inputted signal, and applies the video signal processing block 7 and the screen display device 6 with a control signal generated by the menu operation, in accordance with a current condition.

The screen display device 6, when receiving the control signal associated with the menu operation, controls the switch 8 conforming to a display timing, and superimposes a customized menu on the screen of the display 9 (superimposed display).

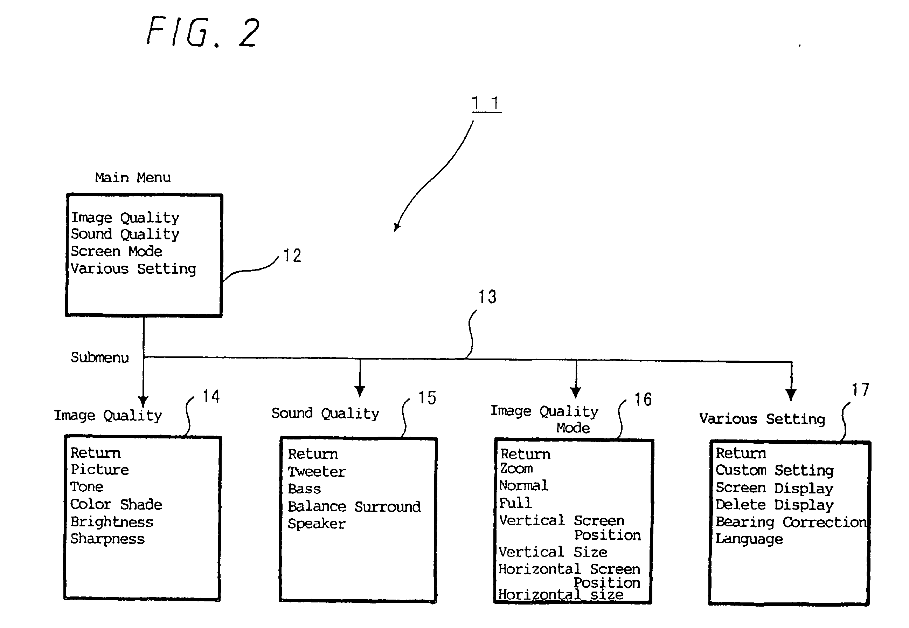

Menu hierarchy 11 are composed of a main menu 12 comprising principal items for adjusting the television receiver body 2 of the television system 1 and a submenu 13 comprising detailed items associated with the items shown in the main menu 12, as illustrated in Fig. 2.

The items of the main menu 12 consist of "Image Quality", "Sound Quality", "Screen Mode" and "Various Setting".

In the submenus 13, an image quality submenu 14 corresponding to the item "Image Quality" consists of "Return", "Picture", "Tone", "Color Shade", "Brightness" and "Sharpness".

In the submenus 13, a sound quality submenu 15 corresponding to the item "Sound Quality" consists of "Return", "Tweeter", "Bass", "Balance", "Surround" and "Speaker".

A screen mode submenu 16 in the submenu 13 corresponding to the item "Screen Mode" consists of "Return", "Zoom", " Normal", "Full", "Vertical Screen Position", "Vertical Size", "Horizontal Screen Position" and "Horizontal Size".

A various setting submenu 17 in the submenu 13 corresponding to the item "Various Setting" consists of " Return", "Custom Setting", "Screen Display", "Delete Image", "Bearing Correction" and "Language".

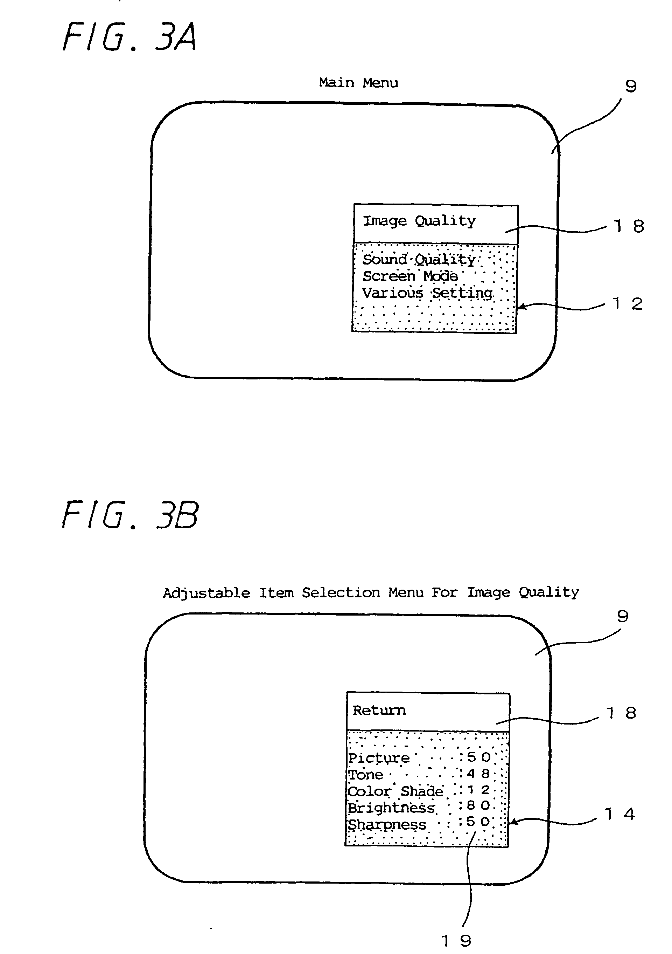

The menu hierarchy 11 constructed as mentioned above is displayed as illustrated in Fig. 3(A), upon turning on the menu key, such that the items in the main menu 12 are vertically aligned in order on the screen of the display 9 with 1 cursor 18 indicating the item "Image Quality" within the displayed items. The user may move the cursor 18 upward or downward with the up key or the down key to select one item desired to adjust from the main menu 12 and depress the determination key to transition to a submenu selecting operation.

For example, when the item "Image Quality" is selected in the main menu 12 and the determination key is depressed, the image quality submenu 14 in the submenu 13 illustrated in Fig. 3(B) is displayed on the screen of the display 9. In this event, the position of the cursor 18 points to "Return", so that if the determination key is depressed in this state, the display is returned to the main menu 12 (see Fig. 3(A)), which is hierarchically positioned one level higher, as illustrated in Fig. 3(A).

The image quality submenu 14 is a menu for selecting an adjustable item for image quality, and a change in specific adjustment value is made in this menu. The respective adjustable items in this image quality menu 14 consist of five items including "Picture", "Tone", "Color Shade", "Brightness" and "Sharpness", for which adjustment values 19 are displayed on the right of the respective items.

For changing the adjustment value 19, the cursor 18 is moved thereto with the up key or the down key in the screen illustrated in Fig. 3(B) for determination, and then the current display transitions to a adjustment value changing screen at a lower hierarchical level.

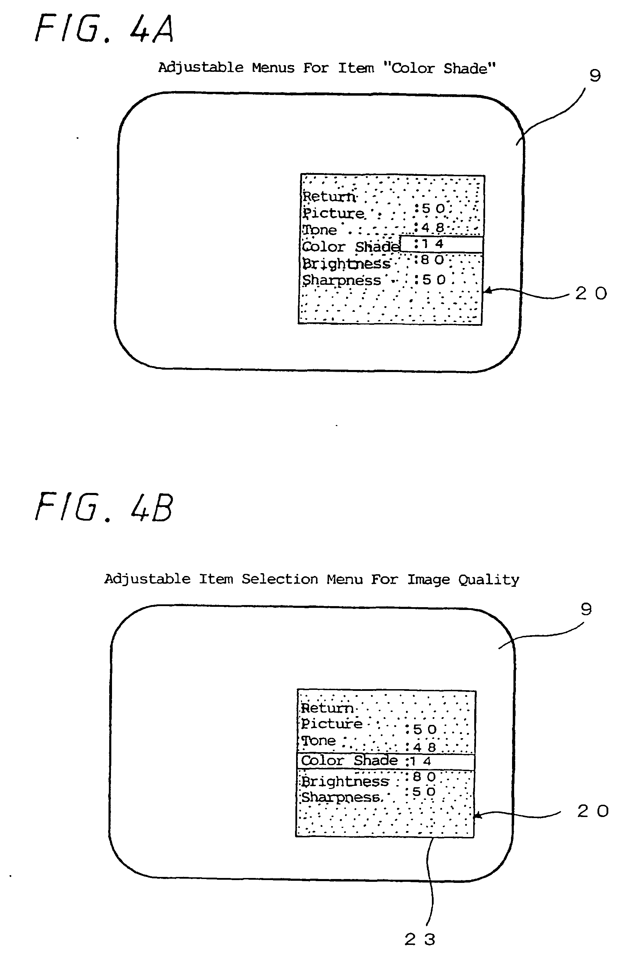

For example, if "Color Shade" is to be adjusted, the cursor 18 is moved to the item "Color Shade" on the image quality submenu 14 and the determination key is depressed. Then, a menu 20 for changing image quality adjustment values is displayed on the screen of the display 9, as illustrated in Fig. 4(A). This screen is the screen of the menu 20 for actually changing the adjustment value, wherein the associated adjustment value may be increased or decreased with the up key or the down key to a new adjustment value. In the screen of the menu 20 in Fig. 4(A), the setting of color shade is changed from "12" to "14" with the up key. If the determination key is depressed in this instance, the new adjustment value (the color shade is "14" in the figure) is held as illustrated in Fig. 4(B), followed by returning to the menu for selecting an adjustable item associated with the image quality.

In this way, a sequence of operations on the menu hierarchy 11 is realized through the foregoing process. By building menus in a hierarchical structure and classifying adjustable items in accordance with the type of the item to create the submenus 13, the user can find more easily a desired adjustable item. On the other hand, selection of an item on a menu at a higher hierarchical level must be made any number of times until a target "operation for changing an adjustment value" is performed on the menu hierarchy 11. If the same adjustable item is adjusted, for example, each time the television receiver is powered on, the excessive item selecting operations up to the selection of that item must be repeated any number of times. Particularly, as the number of menu hierarchical levels is increased and an adjustable item is located at a lower level of the hierarchy, menu operations up to the selection of the adjustable item are increased. In the hierarchical menu 11 having such a disadvantage, how to select a target adjustable item with the least operation steps is the key to improve the performance of the television system 1 which employs the menu hierarchy 11.

As one solution, a customized menu scheme in menu hierarchy will be described below.

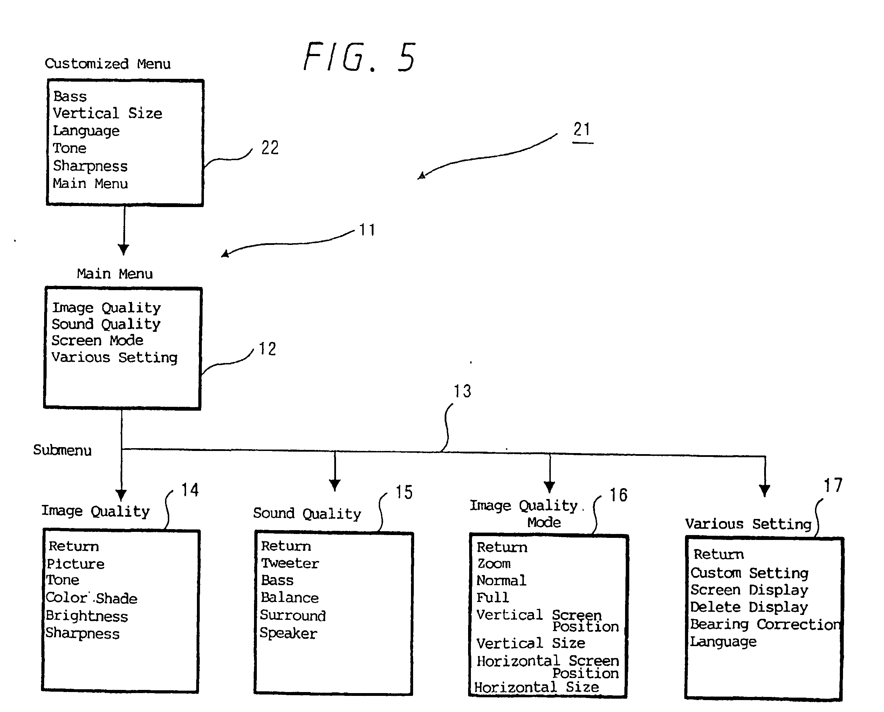

A customized menu scheme 21 in menu hierarchy is configured to permit addition and deletion of a customized menu to and from the menu hierarchy 11, wherein the customized menu is preferably positioned at a higher hierarchical level in the menu hierarchy, as illustrated in Fig. 5. And the contents of the customized menu is a customized menu 22 formed of adjustable items frequently selected by the user.

The menu hierarchy 11 has a similar structure to the menu hierarchy 11 illustrated in the foregoing Fig. 2, and is composed of a main menu 12 comprising principal adjustable items for adjusting the television receiver body 2 and a submenu 13 comprising detailed items associated with the adjustable items indicated in the main menu 12.

As illustrated in Fig. 5, the customized menu 22 is configured to be added to and deleted from the menu hierarchy 11 by selection of "ON/OFF", which is one of adjustable items of the menu, later described, and is preferably configured to be positioned at the highest hierarchical level of the menu hierarchy 11.

The item "ON/OFF", which is included in an item "Custom Setting" in various setting within the submenus 13, is also an item for preventing the customized menu 22 from being displayed on the screen, in addition to the functions of adding to and deleting from the menu hierarchy 11.

Adjustable items frequently used by the user in Fig. 5, previously registered in the customized menu 22, are "Bass", "Vertical Size", "Language", "Tone" and "Sharpness".

It goes without saying that these registered adjustable items are merely illustrative and may be freely set and changed depending on utilization forms of the user.

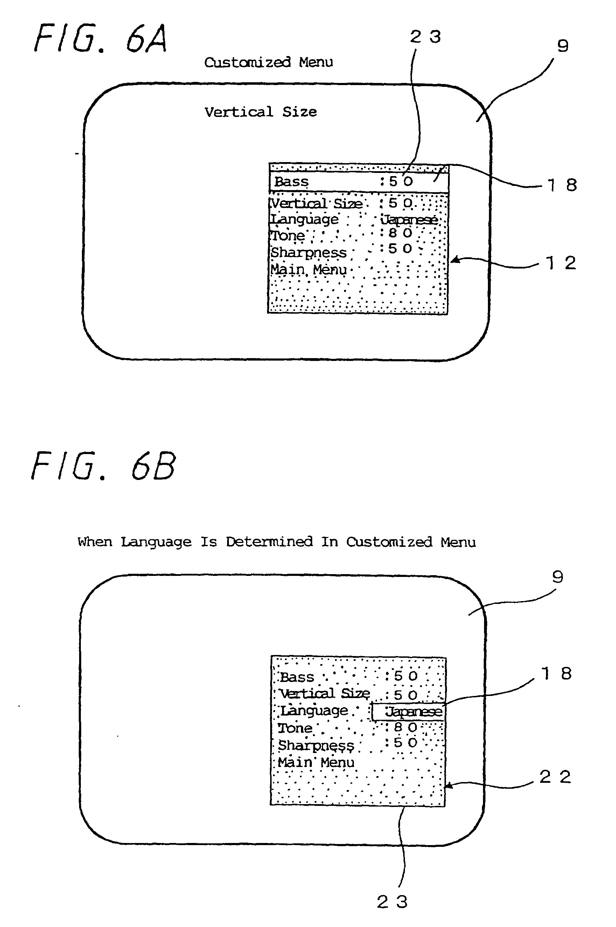

When "Custom Setting" is selected and the customized menu for adjustment is turned "ON", the customized menu 22 registered by the user is displayed on the screen of the display 9 as illustrated in Fig. 6(A), when the menu is turned on with the menu key.

The customized menu 22 displayed on the screen displays five adjustable items previously registered by the user, for example, "Bass", "Vertical Size", "Language", "Tone" and " Sharpness" in two vertical lines as the customized menu 22, and adjustment values 23 are displayed on the right of the respective registered items. In addition, the lowest line of the displayed items displays an item "Main Menu". When the cursor 18 is moved to the item "Main Menu" and determined, the display transitions to the screen of the main menu 12 (see Fig. 3(A)) which is located at a lower hierarchical level of the customized menu 22.

In this way, the adjustment values 23 in the customized menu 22 displayed on the screen are such that the adjustment value for each adjustable item displayed on the screen can be appropriately set and changed without selecting items in the main menu 12 and the submenus 13 at their respective hierarchical levels. More specifically, if "Language", for example, is to be changed, the cursor 18 is moved to the item "Language" and the determination key is depressed to position the cursor 18 at the associated adjustment value 23, as illustrated in Fig. 6(B). Then, the up key or the down key is operated to select the adjustment value 23 for "Language", for example, Japanese, English or the like, and the determination key is depressed to determine the adjustment value 23 for "Language".

By thus employing the customized menu scheme 21, when the user registers adjustable items, these items are registered in the menu at the highest hierarchical level, thereby making it possible to reach a required item with a less number of menu operations to change an adjustment value therefor.

Next, a method of registering required items in the customized menu 22 will be described with reference to the drawings.

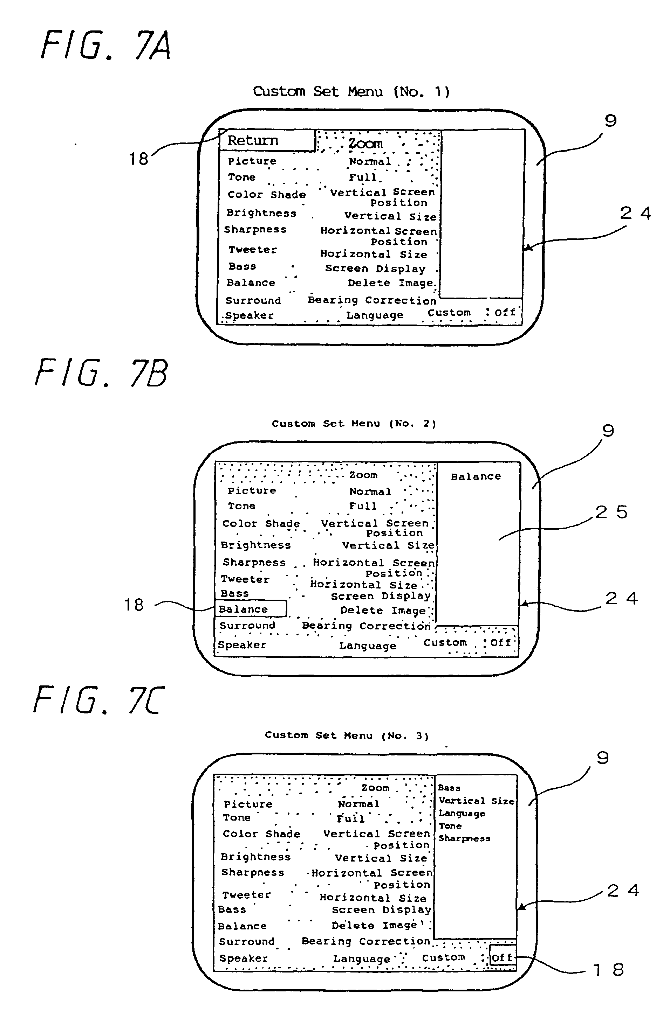

First, an item "Various Setting" on the main menu 12 is selected in the menu hierarchy diagram of Fig. 5. As the screen transitions to the various setting submenu 17, "Custom Setting" is selected here. This causes a custom setting menu 24 comprising custom setting items to be displayed on the screen of the display 9, as illustrated in Fig. 7(A). In this screen, all adjustable items in the menu are collectively displayed so that any of the items can be selected with the cursor 18 by moving the cursor 18 with the up key and the down key. For registering an adjustable item, the cursor 18 is moved to a registered item, and the determination key is depressed. For example, as illustrated in Fig. 7(B), when "Balance", which is one of adjustable items, has been selected and determined, it is registered in a custom setting menu region 25 and displayed in a registered order.

On the other hand, if a registered item is to be deleted, the cursor is moved to a previously registered item and determined, whereby the item is deleted from the customized menu.

When the customized menu is actually used after several items have been registered as described above, the cursor 18 is moved to "Custom" at the lower right corner of the screen in the custom setting menu 24, as illustrated in Fig. 7(C), and the determination key is depressed. When the up key or the down key is depressed in this state, an adjustment value for the item "Custom" is changed to "ON". It should be noted that when no item is registered, the adjustment value for the item "Custom" always shows "OFF". At the time the adjustment value is changed to "ON" in this screen and the determination key is depressed, the structure consisting only of the menu hierarchy 11 (see Fig. 2) is changed to the menu hierarchy 21 having the customized menu 22 at the highest hierarchical level (see Fig. 5). Next, when the menu is turned on with a menu key, not shown, the customized menu 22 illustrated in Fig. 6(A) is displayed on the screen of the display 9.

The management for state transitions of the customized menu 22 described above is entirely controlled by a program in the system microcomputer 5 illustrated in Fig. 1. In the following, the flow of the menu customizing processing will be described with reference to a flow chart.

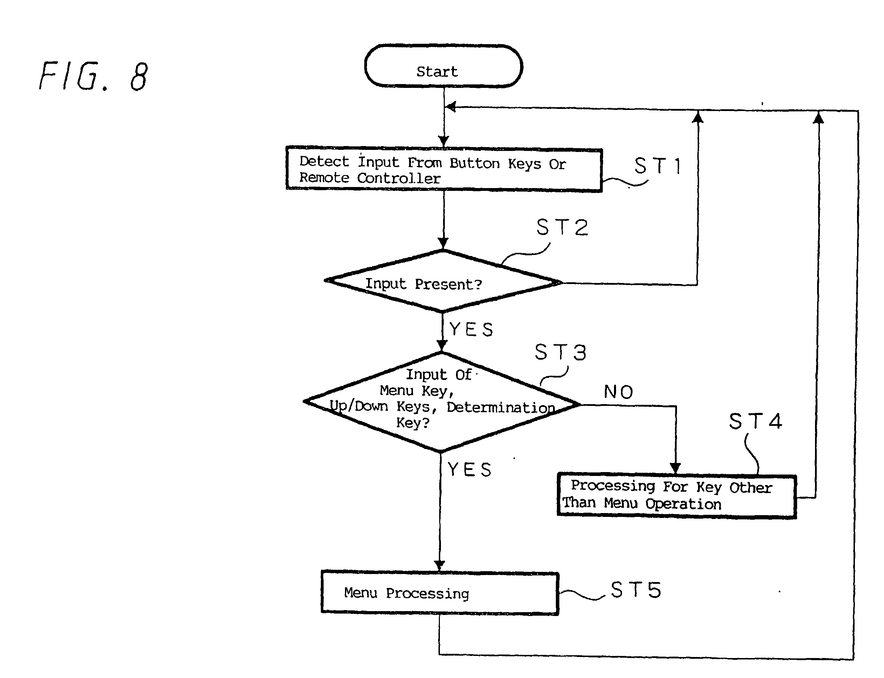

First, as illustrated in Fig. 8, the system microcomputer 5 detects an input state from the body key 3 and the remote controller 10. In other words, it is determined whether or not there has been a key input from the body key 3 or the remote controller 10, and the system microcomputer again detects an input if there is no input (steps ST1, ST2).

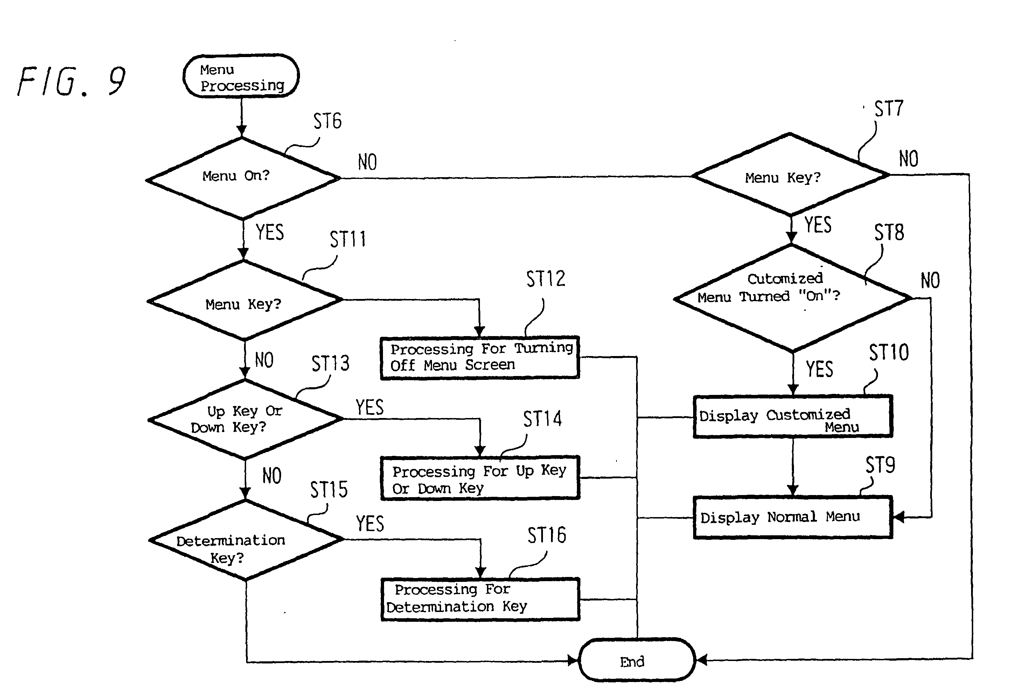

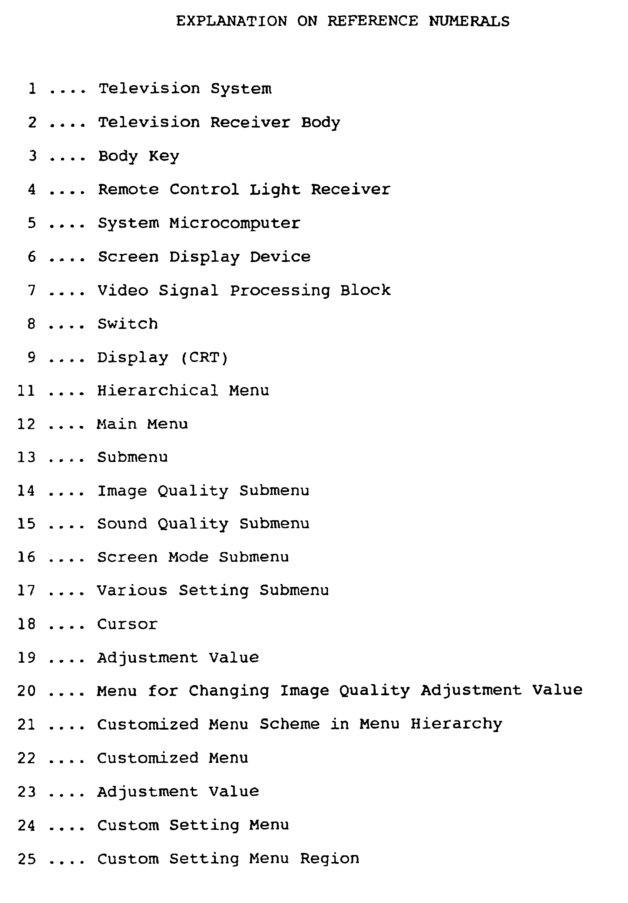

When an input is present, if it is the menu key, or the up key, or the down key, or the determination key, which is an adjustment key required to operate the menu, processing for a menu illustrated in Fig. 9 is performed in accordance with the type of the determined key. If this is a key input which is not required to operate the menu, processing is performed for a key other than the menu scheme (step ST4, ST5).

Next, the processing for a menu, when an operation key required to operate a menu is input, will be described with reference to a flow chart of Fig. 9.

It is first determined whether or not the menu is currently turned on (step ST6). If the menu is turned off, it is determined whether or not an input was a menu key (step ST7).

If the input was anything but the menu key, the processing is terminated without performing anything because the menu is in an off state. If the input was the menu key, it is determined whether the customized menu is "ON" or "OFF" (step ST8).

If "OFF", processing for displaying the ordinary main menu 12 on the screen of the display 9 is performed (step ST9).

If "ON", processing for displaying items currently registered in the customized menu 22 line by line and displaying an item "Main Menu" on the lowest line is performed (step ST10).

If the menu is ON at step ST6, it is first determined whether or not the inputted key was the menu key (step ST11). If the menu key was inputted while the menu has been ON, the processing for turning off the menu screen is performed (step ST12). If the inputted key is determined to be the up key or the down key, the flow proceeds to processing for the up key or the down key (step ST13).

The processing for the up key or the down key is based on the current menu state, and cursor move processing is performed for the case of an item selection menu, or an adjustment value is changed in an adjustment value changing menu screen (step ST14).

It is then determined whether or not the inputted key is the determination key, and the flow proceeds to processing for the determination key if it is the determination key (while the input is determined to be the determination key without fail in this event, the determination is made for confirmation) (step ST15).

The processing for the determination key performs a determination operation depending on each menu screen. When an adjustable item selection screen was present, the display transitions to an adjustment value changing menu screen. When an adjustment value changing menu screen was present, the display transitions to an adjustable item selection screen with a newly changed adjustment value being held (step ST16).

By thus creating the customized menu 22 having previously selected adjustable items required by the user, a target adjustable item can be selected rapidly and easily while avoiding hierarchically operating the same route any number of times.

While in the foregoing embodiment, the customized menu 22 is created by selecting the item "Custom Setting", the present invention is not limited to this. In essence, the customized menu may be created in any way as long as the user can select required adjustable items rapidly and easily from among a large number of adjustable items.

For example, if adjustable items selected once or several times by the user are automatically listed as items in a customized menu and displayed on the screen, operations for "Custom Selection" are not required. Further, even for automatically listed adjustable items, priority may be given thereto to indicate highly frequently used adjustable items and less frequently used adjustable items. If the highly frequently used adjustable items are positioned on higher lines in the customized menu, it can be clearly seen which adjustable items are more frequently used. In addition, if the cursor is brought to the most frequently used adjustable item when the menu is displayed on the screen, the degree of convenience can be further increased.

As will be apparent also from the foregoing description, the customized menu scheme in menu hierarchy and the television system comprising this scheme, according to the present invention, allow adjustable items in menus frequently selected by the user to be added to and deleted from hierarchical menus, thereby effectively enabling each user to rapidly and easily select required adjustable items with an extremely small number of menu operations and to perform appropriate adjustments.

## Claims

1. A method of displaying on a screen (9) of an audio-visual apparatus (2) a plurality of adjustable items in a menu hierarchy (11) comprising a main menu (12) and a plurality of sequentially displayable submenus (13), each for classifying adjustable items in accordance with the type of the items, so that adjustment values for said displayed adjustable items can be appropriately set and changed, said menu hierarchy (11) being displayable in response to operation of a remote control key (10) **characterised in that**:
said menu hierarchy (11) is displayable in response to operation of a key (3) on the body (1) of said audio-visual apparatus;
a customized menu (22) comprising a selection of said adjustable items arbitrarily selected and registered by a user can be added to and deleted from said menu hierarchy (11); and **in that**
said customized menu (22) may selectably be set to be displayed in response to said operation of said key (3) or remote control key (10) before said main menu (12).

2. A method according to claim 1, **characterised in that**:
said customized menu (22) is positioned at a higher hierarchical level in said hierarchy (11) than said main menu (12).

3. A method according to claim 1, **characterised in that**:
the display of said menu hierarchy (11) on the screen (9) is arranged to first display said customized menu (22).

4. A method according to claim 1, **characterised in that**:
said customized menu (22) is configured such that an adjustment value for each of adjustable items constituting said customized menu (22) displayed on the screen (9) can be appropriately set and changed.

5. A method according to claim 1, **characterised in that**:
said hierarchical menus include an item for preventing said customized menu (22) from being displayed on the screen.

6. A television system (2) comprising:
a system microcomputer (5) for controlling system adjustments through a menu hierarchy (11) comprising a main menu (12) and a plurality of displayable submenus (13) each for classifying adjustable items in accordance with the type of the items, so that adjustment values for said displayed adjustable items can be appropriately set and changed, said menu hierarchy (11) being displayable in response to operation of a remote control key (10); and
a display for displaying said adjustable items of said submenus (13) on a screen (9),
**characterised in that**:
said menu hierarchy (11) is displayable in response to operation of a key (3) on the body (1) of said audio-visual apparatus;
a customized menu (12) comprising a selection of said adjustable items arbitrarily selected and registered by a user can be added to and deleted from said menu hierarchy (11); and **in that**
said customized menu (22) may selectably be set to be displayed in response to said operation of said key (3) or remote control key (10) before said main menu (12).

7. A television system according to claim 6, **characterised in that**:
said customized menu (22) is positioned at a higher hierarchical level than said main menu (12).

8. A television system according to claim 6, **characterised in that**:
the display of said hierarchical menus on the screen is arranged to first display said customized menu (22).

9. A television system according to claim 6, **characterised in that**:
said customized menu (22) is configured such that an adjustment value for each of adjustable items constituting said customized menu (22) displayed on the screen (9) can be appropriately set and changed.

10. A television system according to claim 6, **characterised in that**:
said customized menu 922) includes an item for preventing said customized menu (22) from being displayed on the screen (9).

## Patentansprüche

1. Verfahren zum Anzeigen von mehreren einstellbaren Einträgen in einer Menü-Hierarchie (11) auf einem Bildschirm (9) eines audiovisuellen Geräts (2), wobei die Menü-Hierarchie (11) ein Hauptmenü (12) und mehrere sequentiell anzeigbare Untermenüs(13) umfaßt, die jeweils zur Klassifizierung von einstellbaren Einträgen entsprechend dem Typ der Einträge dienen, so daß Einstellwerte für die angezeigten einstellbaren Einträge in geeigneter Weise gesetzt und geändert werden können, wobei die Menü-Hierarchie (11) durch Betätigen einer Fernsteuerungstaste (10) angezeigt werden kann,
**dadurch gekennzeichnet,**
**daß** die Menü-Hierarchie (11) als Reaktion auf das Betätigen einer Taste (3) an dem Gerätekörper (1) des genannten audiovisuellen Geräts anzeigbar ist,
**daß** ein kundenspezifisches Menü (22), das eine Auswahl der genannten einstellbaren Einträge umfaßt, die von dem Benutzer beliebig ausgewählt und registriert werden können, zu der Menü-Hierarchie (11) hinzugefügt und aus ihr entfernt werden kann,
und **daß** das kundenspezifische Menü (22) wahlweise so gesetzt werden kann, daß es durch Betätigen der genannten Taste (3) oder der Fernsteuerungstaste (10) vor dem Hauptmenü (12) angezeigt wird.

2. Verfahren nach Anspruch 1,
**dadurch gekennzeichnet,**
**daß** das kundenspezifische Menü (22) in der genannten Hierarchie (11) in einer höheren hierarchischen Ebene angeordnet ist als das Hauptmenü (12).

3. Verfahren nach Anspruch 1,
**dadurch gekennzeichnet,**
**daß** die Anzeige der Menü-Hierarchie (11) auf dem Bildschirm (9) so angeordnet ist, daß das kundenspezifische Menü (22) zuerst angezeigt wird.

4. Verfahren nach Anspruch 1,
**dadurch gekennzeichnet,**
**daß** das kundenspezifische Menü (22) so konfiguriert ist, daß ein Einstellwert für jeden der einstellbaren Einträge, die das auf dem Bildschirm (9) angezeigte kundenspezifische Menü (22) bilden, in passender Weise gesetzt und geändert werden kann.

5. Verfahren nach Anspruch 1,
**dadurch gekennzeichnet,**
**daß** die hierarchischen Menüs einen Eintrag enthalten, um zu verhindern, daß das kundenspezifische Menü (22) auf dem Bildschirm angezeigt wird.

6. Fernsehsystem (1)
mit einem System-Microcomputer (5) zur Steuerung von Systemeinstellungen durch eine Menü-Hierarchie (11), die ein Hauptmenü (12) und mehrere sequentiell anzeigbare Untermenüs (13) umfaßt, die jeweils zur Klassifizierung von einstellbaren Einträgen entsprechend dem Typ der Einträge dienen, so daß Einstellwerte für die angezeigten einstellbaren Einträge passend gesetzt und geändert werden können, wobei die Menü-Hierarchie (11) durch Betätigen einer Fernsteuerungstaste (10) angezeigt werden kann,
und mit einer Anzeigeeinrichtung zum Anzeigen der einstellbaren Einträge der Untermenüs (13) auf einem Bildschirm (9),
**dadurch gekennzeichnet,**
**daß** die Menü-Hierarchie (11) als Reaktion auf das Betätigen einer Taste (3) an dem Gerätekörper (1) des genannten audiovisuellen Geräts anzeigbar ist,
**daß** ein kundenspezifisches Menü (22), das eine Auswahl der genannten einstellbaren Einträge umfaßt, die von dem Benutzer beliebig ausgewählt und registriert werden können, zu der Menü-Hierarchie (11) hinzugefügt und aus ihr entfernt werden kann,
und **daß** das kundenspezifische Menü (22) wahlweise so gesetzt werden kann, so daß es durch Betätigen der genannten Taste (3) oder der Fernsteuerungstaste (10) vor dem Hauptmenü (12) angezeigt wird.

7. Fernsehsystem nach Anspruch 6,
**dadurch gekennzeichnet,**
**daß** das kundenspezifische Menü (22) in einer höheren hierarchischen Ebene angeordnet ist als das Hauptmenü (12).

8. Fernsehsystem nach Anspruch 6,
**dadurch gekennzeichnet,**
**daß** die Anzeige der hierarchischen Menüs auf dem Bildschirm so angeordnet ist, daß das kundenspezifische Menü (22) zuerst angezeigt wird.

9. Fernsehsystem nach Anspruch 6,
**dadurch gekennzeichnet,**
**daß** das kundenspezifische Menü (22) so konfiguriert ist, daß ein Einstellwert für jeden der einstellbaren Einträge, die das auf dem Bildschirm (9) angezeigte kundenspezifische Menü (22) bilden, in passender Weise gesetzt und geändert werden kann.

10. Fernsehsystem nach Anspruch 6,
**dadurch gekennzeichnet,**
**daß** das kundenspezifische Menü (22) einen Eintrag enthält, um zu verhindern, daß das kundenspezifische Menü (22) auf dem Bildschirm (9) angezeigt wird.

## Revendications

1. Procédé d'affichage, sur un écran (9) d'un appareil audiovisuel (2), d'une pluralité d'éléments réglables selon une hiérarchie de menus (11) comprenant un menu principal (12) et une pluralité de sous-menus affichables séquentiellement (13), chaque sous-menu permettant de classifier des éléments réglables conformément au type des éléments de telle sorte que des valeurs de réglage pour lesdits éléments réglables affichés puissent être établies et modifiées de façon appropriée, ladite hiérarchie de menus (11) pouvant être affichée en réponse à l'actionnement d'une touche de télécommande (10), **caractérisé en ce que** :
ladite hiérarchie de menus (11) peut être affichée en réponse à l'actionnement d'une touche (3) sur le corps (1) dudit appareil audiovisuel ;
un menu personnalisé (22) qui comprend une sélection desdits éléments réglables qui sont sélectionnés et enregistrés de façon arbitraire par un utilisateur peut être additionné à ladite hiérarchie de menus (11) et peut en être supprimé ; et **en ce que**
ledit menu personnalisé (22) peut être établi de façon sélectionnable pour être affiché en réponse audit actionnement de ladite touche (3) ou de ladite touche de télécommande (10) avant ledit menu principal (12).

2. Procédé selon la revendication 1, **caractérisé en ce que** :
ledit menu personnalisé (22) est positionné à un niveau hiérarchique plus haut dans ladite hiérarchie (11) que ledit menu principal (12.).

3. Procédé selon la revendication 1, **caractérisé en ce que** :
l'affichage de ladite hiérarchie de menus (11) sur l'écran (9) est agencé pour afficher en premier ledit menu personnalisé (22).

4. Procédé selon la revendication 1, **caractérisé en ce que** :
ledit menu personnalisé (22) est configuré de telle sorte qu'une valeur de réglage pour chacun des éléments réglables constituant ledit menu personnalisé (22) affiché sur l'écran (9) puisse être établie et modifiée de façon appropriée.

5. Procédé selon la revendication 1, **caractérisé en ce que** :
lesdits menus hiérarchiques incluent un élément pour empêcher que ledit menu personnalisé (22) ne soit affiché sur l'écran.

6. Système de télévision (2) comprenant :
un microcalculateur système (5) pour commander des réglages système par l'intermédiaire d'une hiérarchie de menus (11) comprenant un menu principal (12) et une pluralité de sous-menus affichables séquentiellement (13), chaque sous-menu permettant de classifier des éléments réglables conformément au type des éléments de telle sorte que des valeurs de réglage pour lesdits éléments réglables affichés puissent être établies et modifiées de façon appropriée, ladite hiérarchie de menus (11) pouvant être affichée en réponse à l'actionnement d'une touche de télécommande (10) ; et
un affichage pour afficher lesdits éléments réglables desdits sous-menus (13) sur un écran (9), **caractérisé en ce que** :
ladite hiérarchie de menus (11) peut être affichée en réponse à l'actionnement d'une touche (3) sur le corps (1) dudit appareil audiovisuel ;
un menu personnalisé (22) qui comprend une sélection desdits éléments réglables qui sont sélectionnés et enregistrés de façon arbitraire par un utilisateur peut être additionné à ladite hiérarchie de menus (11) et peut en être supprimé ; et **en ce que**
ledit menu personnalisé (22) peut être établi de façon sélectionnable pour être affiché en réponse audit actionnement de ladite touche (3) ou de ladite touche de télécommande (10) avant ledit menu principal (12).

7. Système de télévision selon la revendication 6, **caractérisé en ce que** :
ledit menu personnalisé (22) est positionné à un niveau hiérarchique plus haut que ledit menu principal (12).

8. Système de télévision selon la revendication 6, **caractérisé en ce que** :
l'affichage desdits menus hiérarchiques sur l'écran est agencé pour afficher en premier ledit menu personnalisé (22).

9. Système de télévision selon la revendication 6, **caractérisé en ce que** :
ledit menu personnalisé (22) est configuré de telle sorte qu'une valeur de réglage pour chacun des éléments réglables constituant ledit menu personnalisé (22) affiché sur l'écran (9) puisse être établie et modifiée de façon appropriée.

10. Système de télévision selon la revendication 6, **caractérisé en ce que** :
ledit menu personnalisé (22) inclut un élément pour empêcher que ledit menu personnalisé (22) ne soit affiché sur l'écran (9).
